# EUROPEAN PATENT APPLICATION

(11) **EP 2 506 344 A1**
(43) Date of publication of application: **03.10.2012**
(21) Application number: 12160633.9
(22) Date of filing: 21.03.2012
(51) Int. Cl.: H01M 4/04, H01M 4/36, H01M 10/44, H01M 10/0525

(54) **Lithium ion storage device**

(30) Priority: 31.03.2011 JP 2011080443
(71) Applicant: Fuji Jukogyo Kabushiki Kaisha, Tokyo 160-8316 (JP)
(72) Inventor: Utsunomiya, Takashi, Tokyo, Tokyo 160-8316 (JP)
(74) Representative: Sajda, Wolf E.

(57) **Abstract**

There is provided a lithium ion storage device. A lithium ion storage device includes a positive electrode (18) having a positive electrode active material (22) that is a lithium-containing compound and is capable of absorbing and desorbing lithium ions, and a negative electrode (12) having a negative electrode active material (16) capable of absorbing and desorbing lithium ions. The irreversible capacity of the positive electrode active material (22) that is a capacity at which lithium ions cannot be reabsorbed after being desorbed from the positive electrode active material (22) is 6 % to 40 % of a usage capacity of the negative electrode (12) that is a capacity at which lithium ions are reversibly absorbed and desorbed by the negative electrode active material (16).

## Description

### BACKGROUND OF THE INVENTION

### 1. Field of the Invention

The present invention relates to a lithium ion storage device.

### 2. Description of the Invention

There is known a pre-doping technique that suppresses the irreversible capacity of electrodes inside a lithium ion storage device by doping in advance a positive electrode and a negative electrode of the lithium ion storage device with lithium ions.

For example, Japanese Patent No. 4 126 157 describes a vertical pre-doping method using a perforated foil having through holes for a current collector. With the vertical pre-doping method, a third electrode for supplying lithium ions to the positive electrode or negative electrode is used in addition to the positive electrode and negative electrode.

Further, for example, Japanese Unexamined Patent Application Publication JP-A-2010-102 841 describes a technique for performing pre-doping from a positive electrode to the negative electrode by using Li₃₋ₓMₓN as a positive electrode active material.

In the vertical pre-doping method described in Japanese Patent No. 4 126 157, the third electrode should be used in addition to the positive electrode and negative electrode. Therefore, a manufacturing process involved becomes more complex than that used for producing conventional lithium ion storage devices, and requires a longer time and a higher cost.

Further, since metallic lithium is used, the metallic lithium may remain in the form of a fine powder after pre-doping. As a result, safety is adversely affected. Furthermore, the third electrode becomes unnecessary after the pre-doping is completed. Therefore, such a configuration is inferior in terms of energy density to that having no third electrode.

The positive electrode active material described in Japanese Unexamined Patent Application Publication JP-A-2010-102 841 is a material that has been generally investigated for use as a negative electrode active material, and the reaction potential for introduction and desorption of lithium ions is as low as approximately 0.8 V. Where such an active material is used for a positive electrode, safety is degraded due to dissolution of the collector or the like. Further, depending on the density of a positive electrode active material layer constituted by a mixture of an active material, a conductive aid, a binder and the like, stable characteristics are difficult to obtain.

Further, complex equipment that requires stringent atmosphere control of moisture and oxygen is necessary for handling the materials.

### SUMMARY OF THE INVENTION

With the foregoing in view, it is an object of the present invention to perform pre-doping in an easy manner and increase an energy density and improve a cycle characteristic, without decreasing safety.

In order to attain the abovementioned obj ect, an aspect of the present invention provides a lithium ion storage device including a positive electrode having a positive electrode active material that is a lithium-containing compound and is capable of absorbing and desorbing lithium ions, and a negative electrode having a negative electrode active material capable of absorbing and desorbing lithium ions.

An irreversible capacity of the positive electrode, which is a capacity at which lithium ions cannot be reabsorbed after being desorbed from the positive electrode active material, is 6 % to 40 % of a usage capacity of the negative electrode, which is a capacity at which lithium ions are reversibly absorbed and desorbed by the negative electrode active material.

Preferably, the initial charge-discharge efficiency of the positive electrode in the lithium ion storage device should be 50 % to 94 %, whereby the cycle characteristic of the lithium ion storage device is further increased.

Preferably, a usage area relative to a reversible capacity of the negative electrode active material should be 4 % to 80 %, whereby the cycle characteristic of the lithium ion storage device is also further increased.

Preferably, the positive electrode active material should include one or more species selected from oxides, organic compounds, sulfides, phosphates, metal complexes, conductive polymers, and metals. By using a positive electrode active material, physical and chemical stability is maintained when the positive electrode and cell are fabricated, during pre-doping, and also during charging and discharging after pre-doping.

In the lithium ion storage device in accordance with the present invention, pre-doping is performed from the positive electrode, Therefore, the third electrode is unnecessary and pre-doping can be performed safely and in an easy manner. A target amount can be pre-doped within a period of time shorter than that in the case where pre-doping is performed from the third electrode.

Further, where the irreversible capacity of the positive electrode is within the above-described range, the cycle characteristic is improved. In addition, since the third electrode is unnecessary, the decrease in energy density can be inhibited.

### BRIEF DESCRIPTION OF THE DRAWINGS

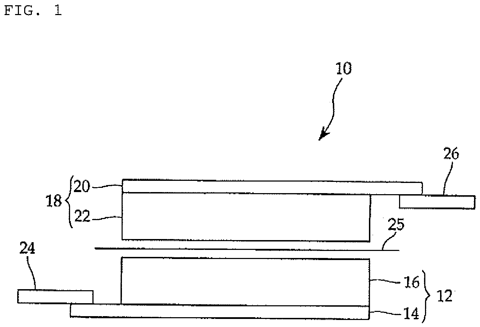

### FIG. 1 is a schematic cross-sectional view of an interior of a lithium ion storage device according to an embodiment of the present invention.

### DESCRIPTION OF THE PREFERRED EMBODIMENT

An embodiment of the present invention will be explained hereinbelow with reference to FIG. 1.

A lithium ion storage device 10 in accordance with the present embodiment is provided with a positive electrode 18 having a positive electrode active material that can dope and de-dope lithium ions, a negative electrode 12 having a negative electrode active material that can dope and de-dope lithium ions, and a nonaqueous electrolytic solution filling the space between the positive electrode 18 and the negative electrode 12.

In the lithium ion storage device 10, charging and discharging is realized by the movement of lithium ions between the positive electrode 18 and the negative electrode 12, and an electric current can be taken out during the discharge. Examples of the lithium ion storage device 10 include a lithium ion rechargeable battery or a lithium ion capacitor.

The positive electrode 18 and the negative electrode 12 are laminated with a film-like separator 25 therebetween, and the separator 25 is impregnated with the nonaqueous electrolytic solution. When the lithium ion storage device 10 includes a plurality of the positive electrodes 18 and negative electrodes 12, the positive electrodes 18 and negative electrodes 12 are laminated alternately.

The present embodiment can be applied both to a laminated electrode unit in which the electrodes are laminated in a planar fashion and a wound electrode unit in which the laminate is wound. The "doping" concept used herein includes adsorption and support in addition to occlusion and absorption. The "de-doping" concept includes reversed processes of the foregoing. For example, the lithium ion storage device 10 can be a lithium ion rechargeable battery or a lithium ion capacitor.

In the present embodiment, the negative electrode 12 is constituted by a negative electrode collector 14 made from a metal substrate such as a Cu foil and having a lead 24 connected thereto and a negative electrode active material layer 16 provided on one or both sides of the negative electrode collector 14. The negative electrode active material layer 16 is formed by coating onto the negative electrode collector 14 and drying a slurry of a negative electrode active material, a binder, and a conductive aid in a solvent such as NMP.

The negative electrode active material 16 is a substance capable of doping and de-doping lithium ions. As such there can be used a metal material, as well as a carbon material, a metal material, an alloy material, or an oxide that can store lithium ions, or a mixture of the foregoing. The particle size of the negative electrode active material 16 is preferably 0.1 µm to 30 µm.

Examples of the suitable metal material include silicon and tin. Examples of the suitable alloy material include a silicon alloy and a tin alloy. Examples of the suitable oxide include a silicon oxide, a tin oxide, and a titanium oxide. Examples of the suitable carbon material include graphite, graphitizable carbon, non-graphitizable carbon, and a polyacene-based organic semiconductor. These materials may be used in a form of a mixture. The present embodiment is particularly effective when applied to a storage device having an alloy-based negative electrode including silicon, tin, and the like.

In the present embodiment, the positive electrode 18 is constituted by a positive electrode collector 20 made from a metal substrate such as an Al foil and having a lead 26 connected thereto and a positive electrode active material layer 22 provided on one or both sides of the positive electrode collector 20. The positive electrode active material layer 22 is formed by coating onto the positive electrode collector 20 and drying a slurry of a positive electrode active material, a binder, and a conductive aid by using a solvent such as NMP.

In accordance with the present embodiment, the type and amount of the positive electrode active material are adjusted so that the irreversible capacity of the positive electrode active material is 6 % to 40 %, preferably 8 % to 25 % of the usage capacity of the negative electrode active material. The irreversible capacity of the positive electrode active material in accordance with the present invention means a capacity at which lithium ions cannot be reabsorbed after being desorbed from the positive electrode active material.

The reversible capacity of the negative electrode active material in accordance with the present invention means a capacity inherent to the negative electrode active material that enables reversible absorption and desorption of lithium ions. The usage capacity of the negative electrode active material in accordance with the present invention is the reversible capacity of the negative electrode active material that is considered in cell designing as a capacity at which lithium ions are reversibly absorbed and desorbed between the negative electrode and positive electrode.

The characteristics of the lithium ion storage device are degraded in a region in which the irreversible capacity of the positive electrode active material is lower than 6 % or higher than 40 % of the usage capacity of the negative electrode active material.

Thus, in accordance with the present embodiment, the relationship between the irreversible capacity of the positive electrode active material and the usage capacity of the negative electrode active material is represented in a percentage. The reason therefor is explained below.

The capacity (mAh/cm²) per unit surface area of the electrode can be controlled not only by a type or composition ratio of the active material, but also by an application density of electrode active material (mg/cm²). Therefore, when cell designing is performed, for example, to determine the capacity that is to be imparted to the electrode, a variety of parameters can be considered, and the cell designing involves an infinite number of patterns.

Meanwhile, the capacity balance of the positive electrode and negative electrode can be represented in a percentage, regardless of the material type or application density, and determining the irreversible capacity of the positive electrode in relation to the usage capacity of the negative electrode has a very important meaning from the standpoint of cell designing.

Note, for reference, that when the irreversible capacity of the positive electrode represented in a percentage in accordance with the present invention is recalculated as an actual capacity, the irreversible capacity of the positive electrode can be estimated at approximately 100 mAh/g to 1000 mAh/g (about 1 mAh/g to 10 mAh/g per 1 %). The reversible capacity of the negative electrode can be estimated at approximately 100 mAh/g to 4200 mAh/g.

In accordance with the present invention, the type and amount of the positive electrode active material are preferably adjusted so that the initial charge-discharge efficiency of the positive electrode is 50 % to 94 %. The initial charge-discharge efficiency as referred to herein is a value determined by (initial discharge)/(initial charge) x 100.

The initial charge as referred to herein is a charge (meaning that lithium ions are desorbed from the positive electrode and introduced into the negative electrode) initially performed after the storage device has been assembled. The initial discharge as referred to herein is a discharge (meaning that lithium ions are desorbed from the negative electrode and introduced into the positive electrode) initially performed after the storage device has been assembled. One set of the charge and the discharge is called a cycle.

The initial charge-discharge efficiency of the positive electrode is set to 50 % to 94 %, whereby the cycle characteristic is improved. The efficiency is 62 % to 86 %, whereby the cycle characteristic is further improved. The cycle characteristic is degraded when the efficiency is lower than 50 % or higher than 94 %.

A lithium-containing compound capable of doping and de-doping lithium ions can be used as the positive electrode active material. Suitable examples include an oxide, a phosphate, an organic compound, a sulfide (including an organic sulfur and an inorganic sulfur), a metal complex, a conductive polymer, and a metal.

In particular, a material is required that is physically and chemically stable during fabrication of the positive electrode and cell and also during pre-doping and charging and discharging after pre-doping. From this standpoint, an oxide is especially preferred. Other abovementioned materials such as a organic compound and sulfide can be also used singly, but it is preferred that they be used in a mixture with an oxide.

A positive electrode active material with a high lithium release amount is preferred. Examples of such a material include transition metal oxides and phosphates such as LiCoO₂, LiNiO₂, LiMn₂O₄, and LiFePO₄, organic compounds, sulfides, or conductive polymers such as alkoxide, phenoxide, polypyrrole, anthracene, polyaniline, thioether, thiophene, thiol, sulfurane, persulfurane, thiolate, dithiazole, disulfide, and polythiophene, and inorganic sulfur into which lithium has been introduced in advance.

These materials can be used as a main reversible active material, or as an auxiliary active material for increasing the irreversible capacity. The active material used to increase the irreversible capacity may be continuously retained in the positive electrode after lithium ions are released, changed into another compound, dissolved in the electrolyte, or released as a gas.

The particle size of the positive electrode active material is preferably 0.1 µm to 30 µm. By selecting such a material, it is possible to perform the negative electrode pre-doping in a desirable mode. A positive electrode active material can be selected as appropriate and used singly or a plurality of positive electrode active materials may be used in combination to adjust the irreversible capacity of the positive electrode.

The electrolytic solution used in accordance with the present embodiment is a nonaqueous electrolytic solution because such a solution causes no electrolysis even under a high voltage and enables the stable presence of lithium ions. An electrolytic solution is used that is prepared by using a typical lithium salt as an electrolyte and dissolving the electrolyte in a solvent.

The electrolyte and solvent are not particularly limited. Examples of the suitable electrolytes include LiClO₄, LiAsF₆, LiBF₄, LiPF₆, LiB(C₆H₅)₄, CH₃SO₃Li, CF₃SO₃Li, (C₂F₅SO₂)₂NLi, (CF₃SO₂)₂NLi and a mixture thereof. These electrolytes may be used singly or any of these may be used in combination. In accordance with the present embodiment, it is especially preferred that LiPF₆ or LiBF₄ be used.

Examples of the solvent for the nonaqueous electrolytic solution include a solvent with a comparatively low molecular weight such as chain carbonates such as dimethyl carbonate (DMC), diethyl carbonate (DEC), and ethylmethyl carbonate (MEC), cyclic carbonates such as ethylene carbonate (EC), propylene carbonate (PC), butylene carbonate (BC), and vinylene carbonate (VC), and also acetonitrile (AN), 1,2-dimethoxyethane (DME), tetrahydrofuran (THF), 1,3-dioxolane (DOXL), dimethylsulfoxide (DMSO), sulfulane (SL), and propionitrile (PN), or a mixture thereof.

The preferred solvent in the electrolytic solution in accordance with the present embodiment is a mixture of a chain carbonate and a cyclic carbonate. A multi-mixture of two or more types of two or more chain carbonates and two or more cyclic carbonates may also be used. Fluoroethylene carbonate (FEC) or the like can be added to the solvent, as necessary.

In the present embodiment, the term pre-doping means doping the negative electrode in advance with lithium ions to a desired capacity prior to the initial charge. One of the objects of pre-doping is to compensate the irreversible capacity fraction of the negative electrode (capacity obtained by subtracting the initial discharge capacity from the initial charge capacity) with doping in advance from the exterior of the negative electrode, but the reversible capacity fraction may also be doped.

In the present embodiment, the improvement in the cycle characteristic is obtained by doping the reversible capacity fraction. In the present embodiment, the exterior of the negative electrode means the positive electrode. Pre-doping is preferably performed in an environment at a temperature equal to or lower than 40 °C. In the low-temperature environment with a temperature equal to or lower than 40 °C, gas generation from the electrolytic solution during pre-doping or formation of a SEI film can be avoided. Therefore, pre-doping can be uniformly performed.

In the present embodiment, the usage area of the negative electrode active material is preferably 4 % to 80 % of the reversible capacity of the negative electrode.

The usage area of the negative electrode active material as referred to herein is a SOC (State Of Charge) region between an end of charge and an end of discharge used for extracting energy from a cell in which the positive electrode and negative electrode are assembled. The initial charge capacity corresponds to this region. The charge-discharge capacity in the SOC region corresponds to the usage capacity. The reversible capacity of the negative electrode active material is a capacity that is inherent to the negative electrode active material and represents a capacity enabling reversible absorption and desorption of lithium ions.

The usage area of the negative electrode active material can be controlled by the irreversible capacity of the positive electrode and the reversible capacity of the positive electrode. Thus, a lower limit value of the usage area of the negative electrode active material can be determined by the irreversible capacity of the positive electrode. In addition, an upper limit value of the usage area of the negative electrode active material can be determined by the reversible capacity of the positive electrode.

When the usage area of the negative electrode active material is 4 % to 80 % of the reversible capacity, the cycle characteristic is improved. It is further preferred that the usage area of the negative electrode active material be 10 % to 70 % of the reversible capacity. When the usage area is lower than 4 % or higher than 80 %, the electrodes are significantly damaged and the cycle characteristic is degraded.

As mentioned hereinabove, with this embodiment of the present invention, by selecting an optimal material for the positive electrode, it is possible to obtain the following effects: pre-doping can be performed without an additional production process, energy density is increased, cycle characteristic is improved, safety is increased, and production cost is reduced.

While a significant increase in durability can be obtained, an excellent advantage in productivity can be obtained that the pre-doping process is very simple and can be completed within a short period of time.

The storage device of the present embodiment also achieves an advantage in quality: because lithium ions move from the opposing electrodes, gas generation from the electrolytic solution during pre-doping and formation of SEI are avoided, and pre-doping of lithium ions to the positive electrode and negative electrode can be performed uniformly.

Furthermore, the short-time processing ensures uniform impregnation of the electrolytic solution into the electrodes and reduces the probability of the metallic lithium deposition on the negative electrode. By ensuring uniform pre-doping and reducing the probability of lithium deposition, it is possible to improve significantly a yield of the storage device and obtain important industrial benefits.

### EXAMPLES

Experiment examples serving as reference examples supporting the effects of the present invention are shown below. The present invention is described below in greater detail on the basis of examples thereof. However, the present invention is not limited to the present examples.

### Comparison of Pre-doping from Positive Electrode and Pre-doping from Third Electrode

### Experiment Examples 1 to 5

### (1) Fabrication of positive electrode

Herein, 90 parts by weight of LiCoO₂ as a positive electrode active material, 5 parts by weight of PVdF as a binder, and a 5 parts by weight of carbon black as a conductive aid were weighed to prepare a positive electrode slurry with 100 parts by weight of N-methyl-2-pyrrrolidone (NMP). The positive electrode slurry was coated by a doctor blade method onto an Al foil collector (coating portion of 26 mm x 40 mm, thickness of 10 µm, with a protruding tab portion for lead connection), and dried, followed by pressing, to form thereby a positive electrode active material with a thickness of 100 µm.

The coating density of the positive electrode active material layer was 20 mg/cm², and the layer was fabricated so as to obtain 50 % of the reversible capacity of the negative electrode active material. With such a procedure, ten positive electrodes were fabricated in which the positive electrode active material layer was provided on both surfaces of the collector.

### (2) Fabrication of negative electrode

Herein, 70 parts by weight of silicon (silicon powder manufactured by Aldridge Co.) ground to a particle size equal to or less than 5 µm as a positive electrode active material, 15 parts by weight of a polyimide as a binder, and 5 parts by weight of carbon black as a conductive aid were weighed to prepare a negative electrode slurry with 130 parts by weight of NMP. The negative electrode slurry was coated by a doctor blade method onto a Cu foil collector (coating portion of 24 mm x 38 mm, thickness of 10 µm, with a protruding tab portion for lead connection), and dried, followed by pressing, to form thereby a negative electrode active material with a thickness of 26 µm.

The coating density of the negative electrode active material layer was 2.1 mg/cm². With such a procedure, nine negative electrodes were fabricated in which the positive electrode active material layer was provided on both surfaces of the collector and two negative electrodes were fabricated in which the positive electrode active material layer was provided only on one surface of the collector.

### (3) Fabrication of cell

The negative electrode and positive electrode fabricated in the above-described manner were alternately laminated (electrode stack) with a polyethylene separator (thickness 25 µm) interposed therebetween, such that the negative electrodes having the negative electrode active material layer only on one side were disposed on the outer sides (such that the negative electrode active material layer faced inward). The tab portion of each positive electrode collector was integrally welded, and then an aluminum lead was welded. Likewise, the tab of each negative electrode collector integrally welded, and then a nickel lead was welded.

The stack constituted by the positive electrode and negative electrode was sealed and fused by using an exterior material of aluminum laminate in such a manner that the leads were exposed to the outside, leaving an electrolyte solution inlet. An electrolytic solution prepared by dissolving LiPF₆ as a lithium salt in a mixed solvent of EC/DMC/FEC at 70:25:5 to 1.2 M was injected through the electrolyte solution inlet and the external material of aluminum laminate was then completely sealed.

### (4) Pre-doping process

The leads of the positive and negative electrodes of the cell fabricated in the above-described manner were connected to corresponding terminals of a charge-discharge test device (manufactured by Asuka Electronic Co., Ltd.), and pre-doping was performed up to SOC 10 % (Experiment Example 1), SOC 20 % (Experiment Example 2), SOC 30 % (Experiment Example 3), 40 % (Experiment Example 4), and SOC 50 % (Experiment Example 5) at a charge rate of 0.1 C from the positive electrode to the negative electrode. The pre-doping time in each Experiment Example is shown in Table 1.

### Experiment Examples 6 to 10

Electrode stacks were fabricated in the same manner as in Examples 1 to 5, except that the positive electrode and the negative electrode used a collector having through holes (thickness of 10 µm and opening ratio of 55 %).

In the present Experiment Examples, a lithium electrode serving as a third electrode was used in addition to the positive and negative electrodes. The lithium electrode was fabricated by attaching a metallic lithium foil to a 26 mm x 40 mm collector having a tab portion. The thickness of the metallic lithium was set according to the pre-doped amount of Experiment Examples 6 to 10.

The fabricated lithium electrodes were laminated on the electrode stack, with a polyethylene separator interposed therebetween. The tab portion of the negative electrode collector was welded to the lead in the same manner as in Experiment Examples 1 to 5. The tab portion of the lithium electrode collector was integrally welded with the tab portion of the corresponding negative electrode collector and then a nickel lead was welded.

The stack constituted by the lithium electrode, positive electrode and negative electrode was sealed and fused by using an exterior material of an aluminum laminate in such a manner that the leads were exposed to the outside, leaving an electrolyte solution inlet. An electrolyte solution prepared by dissolving LiPF₆ as a lithium salt in a mixed solvent of EC/DMC/FEC at 70:25:5 to 1.2 M was injected through the electrolyte solution inlet and the external material of aluminum laminate was then completely sealed.

The negative electrode and lithium electrode were short circuited since the collectors thereof were connected. Therefore, pre-doping was started as the electrolyte solution was injected. Pre-doping was performed to
10 % (Experiment Example 1),
20 % (Experiment Example 2),
30 % (Experiment Example 3),
40 % (Experiment Example 4), and
50% (Experiment Example 5)
according to the respective amount of metallic lithium. The pre-doping time of each Experiment Example is shown in Table 1.

**Table 1**

| | Test Example 1 | Test Example 2 | Test Example 3 | Test Example 4 | Test Example 5 | Test Example 6 | Test Example 7 | Test Example 8 | Test Example 9 | Test Example 10 |
|---|---|---|---|---|---|---|---|---|---|---|
| Pre-doping method | Positive electrode | Positive electrode | Positive electrode | Positive electrode | Positive electrode | Vertical | Vertical | Vertical | Vertical | Vertical |
| Pre-doping amount | 10 % | 20 % | 30 % | 40 % | 50 % | 10 % | 20 % | 30 % | 40 % | 50 % |
| Pre-doping time | 0.1 | 0.2 | 0.3 | 0.4 | 0.5 | 0.41 | 0.82 | 1.37 | 2.73 | 5.67 |

By performing pre-doping from the positive electrode, it was possible to obtain a target pre-doped amount within a shorter time of period than when pre-doping was performed from the third electrode. It is indicated that the effect increases with the increase in the pre-doping amount. When pre-doping is performed from the third electrode, a diffusion distance of lithium ions increases and the electrode or separator through which the diffusing ions pass serve as a resistance against the lithium ion movement, whereby a long time is required for pre-doping.

### Evaluation of pre-doped amount and discharge retention ratio by using positive pseudo-electrode

A positive pseudo-electrode was fabricated in which a metallic lithium foil with a thickness of 150 µm was attached to a collector. A cell was fabricated by the same method as that of Experiment Example 1, except that this positive pseudo-electrode and one negative electrode fabricated in Experiment Example 1 were used to obtain a two-electrode configuration.

The leads of the positive and negative electrodes of the fabricated cell were connected to respective terminals of a charge-discharge test device (manufactured by Asuka Electronic Co., Ltd.), and pre-doping was performed from SOC 5 % to SOC 50 % (Experiment Examples 12 to 19) from the positive electrode to the negative electrode at a charge rate of 0.1 C. No pre-doping was performed in Experiment Example 11.

Then, charging and discharging were performed in a negative electrode usage area (SOC) as shown in Table 2 at a charge-discharge rate of 0.1 C. The capacity retention ratio after 30 cycles is shown in Table 2.

**Table 2**

| | Test Example 11 | Test Example 12 | Test Example 13 | Test Example 14 | Test Example 15 | Test Example 16 | Test Example 17 | Test Example 18 | Test Example 19 |
|---|---|---|---|---|---|---|---|---|---|
| Pre-doping amount | 0 % | 5 % | 10 % | 20 % | 20 % | 20 % | 30 % | 40 % | 50 % |
| Negative electrode usage area | 0-40 % | 5-45 % | 10-50 % | 20-60 % | 20-80 % | 20-90 % | 30-70 % | 40-80 % | 50-90 % |
| Capacity retention ratio (after 30 cycles) | 39.3 | 91.2 | 99.8 | 99.6 | 95.9 | 27.7 | 99.7 | 94 | 46.3 |

An experiment was conducted by using metallic lithium as a positive pseudo-electrode. In the present experiment, the pre-doped amount can be considered as an irreversible capacity of the positive electrode and the subsequent charge-discharge amount can be considered as the reversible capacity of the positive electrode.

In the results obtained by examining the pre-doped amount by using metallic lithium as a counter electrode, a high capacity retention ratio was obtained when the irreversible capacity of the positive pseudo-electrode was 5 % to 40 %, preferably 10 % to 30 %. This is attributed to the fact that lithium ions serving as the irreversible capacity of the positive electrode have been accumulated in advance in the negative electrode and played the role of a reservoir compensating cyclic degradation.

This fact also relaxes a stress caused by the expansion and contraction of the negative electrode active material layer occurring during charging and discharging. An excellent capacity retention ratio seemed to have been obtained by using the positive electrode having the irreversible capacity within such a range. However, when a 90 % region was used as the negative electrode usage area, the capacity retention ratio became low.

In other words, a high capacity retention ratio can be attained by selecting a positive electrode active material that has an irreversible capacity enabling the pre-doping to a capacity of approximately 5 % to 40 %, preferably 10 % to 30 % with respect to the negative electrode and such that the usage area of the negative electrode does not reach about 90 % even when the reversible capacity of the positive electrode is added.

### Evaluation of irreversible capacity of positive electrode and reversible capacity of negative electrode

### Example 1

### (1) Fabrication of positive electrode

Herein, 90 parts by weight of LiFePO₄ as a positive electrode active material, 5 parts by weight of PVdF as a binder, and 5 parts by weight of carbon black as a conductive aid were weighed to prepare a positive electrode slurry with 100 parts by weight of N-methyl-2-pyrrolidone (NMP). The positive electrode slurry was coated by a doctor blade method onto an Al foil collector (coating portion of 26 mm x 40 mm, thickness of 10 µm, with a protruding tab portion for lead connection), and dried, followed by pressing, to form thereby a positive electrode active material with a thickness of 100 µm.

The coating density of the positive electrode active material layer was 20 mg/cm², and the layer was fabricated so as to obtain 50 % of the reversible capacity of the negative electrode active material. The irreversible capacity of the positive electrode was 8 % and the reversible capacity (ΔSOC 50 %) of the negative electrode was 8.7 %. Note that the irreversible capacity of LiFePO₄ is 12 mAh/g.

### (2) Fabrication of negative electrode

Herein, 70 parts by weight of silicon (silicon powder manufactured by Aldridge Co.) ground to a particle size equal to or less than 5 µm as a positive electrode active material, 15 parts by weight of a polyimide as a binder, and 5 parts by weight of carbon black as a conductive aid were weighed to prepare a negative electrode slurry with 130 parts by weight of NMP.

The negative electrode slurry was coated by a doctor blade method onto a Cu foil collector (coating portion of 24 mm x 38 mm, thickness of 10 µm, with a protruding tab portion for lead connection), and dried, followed by pressing, to form thereby a negative electrode active material with a thickness of 26 µm, The coating density of the negative electrode active material layer was 2.1 mg/cm². The reversible capacity of silicon is 3000 mAh/g and the usage capacity is 1500 mAh/g.

### (3) Fabrication of cell

The negative electrode and positive electrode were laminated with a polyethylene separator (thickness of 25 µm) interposed therebetween so that the active material layers thereof faced each other. An aluminum lead was welded to the tab portion of the positive electrode collector, and a nickel lead was welded to the tab portion of the negative electrode collector.

A stack constituted by the positive and negative electrodes was sealed and fused by using an exterior material of an aluminum laminate in such a manner the leads were exposed to the outside while leaving an electrolyte solution inlet. An electrolyte solution prepared by dissolving LiPF₆ as a lithium salt in a mixed solvent of EC/DMC/FEC at 70:25:5 to 1.2 M was injected through the electrolyte solution inlet and the external material of an aluminum laminate was then completely sealed.

### (4) Pre-doping process

The leads of the positive and negative electrodes of the cell fabricated in the above-described manner were connected to corresponding terminals of a charge-discharge test device (manufactured by Asuka Electronic Co., Ltd.), and pre-doping was performed up to SOC 4.3 % at a charge rate of 0.1 C from the positive electrode to the negative electrode.

### (5) Charge-discharge test

The initial charge to SOC 54.3 % was then performed at a charge rate of 0.1 C. Thus, the negative electrode usage range (ΔSOC) was set to 50 %. Then, the initial discharge to SOC 4.3 % was performed at a discharge rate of 0.1 C. The charge-discharge cycle was then similarly repeated and the discharge capacity after 30 cycles was measured. The capacity retention ratio after 30 cycles was 88.7 % and a good cycle characteristic was obtained.

Since the negative electrode is pre-doped by using the irreversible capacity of the positive electrode, effective pre-doping can be implemented. At the same time, the usage area of the negative electrode can be controlled and the capacity of active materials can be used to a maximum limit. Therefore, it is possible to improve the cycle characteristic and increase the energy density at the same time.

### (6) Measurement of initial charge-discharge efficiency

A lithium electrode was fabricated in which a metallic lithium foil with a thickness of 150 µm was attached to a collector. A cell was fabricated by combining the lithium electrode with one positive electrode fabricated in the above-described section (1) by using the method described in the above section (3). The cell was initially charged to SOC 54.3 % at a charge rate of 0.1 C. Then, the initial discharge was performed to SOC 4.3 % at a discharge rate of 0.1 C. An initial charge-discharge efficiency was determined from the initial charge capacity and initial discharge capacity at this time (initial charge-discharge efficiency = initial discharge capacity/initial charge capacity).

The initial charge-discharge efficiency of the cell was 92 %. In this cell, the lithium electrode capacity was larger than the positive electrode capacity. Therefore, the measured cell capacity was equal to the positive electrode capacity. Thus, the initial charge-discharge efficiency of the positive electrode fabricated as described in the section (1) was 92 %.

### Example 2

An experiment was conducted under the same conditions as Example 1, except that Li(Ni_{1/3}Mn_{1/3}Co_{1/3})O₂ (90 parts by weight) was used instead of LiFePO₄ of Example 1 as a positive electrode active material and the pre-doped amount was 6.8 %. The irreversible capacity of the positive electrode was 12 % and constituted 13.6 % of the usage capacity of the negative electrode.

Charging and discharging were conducted in a range of from SOC 6.8 % to SOC 56.8 % at a charge-discharging rate of 0.1 C. The initial charge-discharge efficiency of the positive electrode was 88 %. The capacity retention ratio after 30 cycles was 95.7 % and a good cycle characteristic was obtained. Note that the irreversible capacity of Li(Ni_{1/3}Mn_{1/3}Co_{1/3})O₂ is 22 mAh/g.

### Example 3

An experiment was conducted under the same conditions as Example 1, except that LiNiO₂ (90 parts by weight) was used instead of LiFePO₄ of Example 1 as a positive electrode active material and the pre-doped amount was 12.5 %. The irreversible capacity of the positive electrode was 20 % and constituted 25.0 % of the usage capacity of the negative electrode.

Charging and discharging were conducted in a range of from SOC 12.5 % to SOC 62.5 % at a charge-discharge rate of 0.1 C. The initial charge-discharge efficiency of the positive electrode was 80 %. The capacity retention ratio after 30 cycles was 91.9 % and a good cycle characteristic was obtained. Note that the irreversible capacity of LiNiO₂ is 40 mAh/g.

### Comparative Example 1

An experiment was conducted under the same conditions as Example 1, except that LiCoO₂ (90 parts by weight) was used instead of LiFePO₄ of Example 1 as a positive electrode active material and the pre-doped amount was 1.5 %. The irreversible capacity of the positive electrode was 3 % and constituted 3.1 % of the usage capacity of the negative electrode.

Charging and discharging were conducted in a range of from SOC 1.5 % to SOC 51.5 % at a charge-discharge rate of 0.1 C. The initial charge-discharge efficiency of the positive electrode was 97 %. The capacity retention ratio after 30 cycles was 73.3 % and a certain cyclic degradation was observed. Note that the irreversible capacity of LiCoO₂ is 5 mAh/g.

### Comparative Example 2

An experiment was conducted under the same conditions as Example 1, except that Li(Ni_{0.7}Ti_{0.3})O₂ (90 parts by weight) was used instead of LiFePO₄ of Example 1 as a positive electrode active material and the pre-doped amount was 61.1 %. The irreversible capacity of the positive electrode was 55 % and constituted 122.2 % of the usage capacity of the negative electrode. Charging and discharging were conducted in a range from SOC 61.1 % to SOC 100 % at a charge-discharge rate of 0.1 C.

In the present example, a ΔSOC 50 % charge was attempted to be performed in the initial charging, but actually the negative electrode capacity reached 100 % in the course of charging and only ΔSOC 39.8 % was charged. For this reason, the charge-discharge test was conducted in the aforementioned range. The initial charge-discharge efficiency of the positive electrode was 45 %. The capacity retention ratio after 30 cycles was 21.7 % and a significant cyclic degradation was observed. Note that the irreversible capacity of Li(Ni_{0.7}Ti_{0.3})O₂ is 70 mAh/g.

### Comparative Example 3

An experiment was conducted under the same conditions as Example 1, except that Li₂MnO₃ (90 parts by weight) was used instead of LiFePO₄ of Example 1 as a positive electrode active material and the pre-doped amount was 92.9 %. The irreversible capacity of the positive electrode was 65 % and constituted 185.7 % of the usage capacity of the negative electrode. Charging and discharging were conducted in a range of from SOC 92.9 % to SOC 100 % at a charge-discharge rate of 0.1 C.

In the present example, the charge-discharge test was conducted in the aforementioned range for the same reason as in Comparative Example 2. The initial charge-discharge efficiency of the positive electrode was 35 %. The capacity retention ratio after 30 cycles was 13.9 % and a significant cyclic degradation was observed. Note that the irreversible capacity of Li₂MnO₃ is 200 mAh/g.

**Table 3**

| | Comparative Example 1 | Example 1 | Example 2 | Example 3 | Comparative Example 2 | Comparative Example 3 |
|---|---|---|---|---|---|---|
| Active material | LiCoO₂ | LiFePO₄ | Li(Ni_{1/3}Mn_{1/3}Co_{1/3})O₂ | LiNiO₂ | Li(Ni_{0.7}Ti_{0.3})O₂ | Li₂MnO₃ |
| Irreversible capacity of positive electrode | 3 % | 8 % | 12 % | 20 % | 55 % | 65 % |
| Pre-doping amount | 1.5 % | 4.3 % | 6.8 % | 12.5 % | 61.1 % | 92.9 % |
| Initial charge-discharge efficiency of positive electrode | 97 % | 92 % | 88 % | 80 % | 45 % | 35 % |
| Irreversible capacity of positive electrode vs. negative electrode usage capacity | 3.1 % | 8.7 % | 13.6 % | 25.0 % | 122.2 % | 185.7 % |
| Negative electrode usage area (ΔSOC 50 %) | 1.5 - 51.5 % | 4.3-54.3 % | 6.8 - 56.8 % | 12.5-62.5 % | 61.1 - 100 % | 92.9 - 100 % |
| Capacity retention ratio (after 30 cycles) | 73.3 | 88.7 | 95.7 | 91.9 | 21.7 | 13.9 |

### Example 4

An experiment was conducted under the same conditions as Example 1, except that a mixture of LiCoO₂ (80 parts by weight) and Li₂MnO₃ (10 parts by weight) was used instead of LiFePO₄ of Example 1 as a positive electrode active material and the pre-doped amount was 5.5 %.

The irreversible capacity of the positive electrode was 10 % and constituted 6.6 % of the usage capacity of the negative electrode. Charging and discharging were conducted in a range of from SOC 5.5 % to SOC 55.5 % at a charge-discharge rate of 0.1 C. The initial charge-discharge efficiency of the positive electrode was 90 %. The capacity retention ratio after 30 cycles was 81.1 % and a good cycle characteristic was obtained.

**Table 4**

| | Example 4 |
|---|---|
| Active material | LiCoO₂ |
| | 80 parts by weight |
| | Li₂MnO₃ |
| | 10 parts by weight |
| Irreversible capacity of positive electrode | 10 % |
| pre-doping amount | 5.5 % |
| Initial charge-discharge efficiency of positive electrode | 90 % |
| Irreversible capacity of positive electrode vs. negative electrode usage capacity | 11.0 % |
| Negative electrode usage area (ΔSOC 50 %) | 5.5 - 55.5 % |
| Capacity retention ratio (after 30 cycles) | 81.1 % |

A particularly excellent capacity retention ratio in the cases of using different positive electrode active materials was obtained when the irreversible capacity of the positive electrode active material was 8 % to 20 %. This supports the results obtained when metallic lithium was used as a positive pseudo-electrode. Further, when the irreversible capacity of the positive electrode is used for pre-doping, it is not necessary to use metallic lithium. Therefore, fine powder of metallic lithium does not remain inside the cells and excellent safety is achieved.

In accordance with the present invention, it is found that a good cycle characteristic is obtained when the irreversible capacity of the positive electrode active material is within a range from 6 % to 40 % of the usage capacity of the negative electrode active material. By regulating the irreversible capacity of the positive electrode by the usage capacity of the negative electrode active material, it is possible to regulate the usage area of the negative electrode active material and extract maximum limit of the reversible capacity inherent to the active material as a cell capacity.

In addition, an optimum positive electrode - negative electrode balance can be easily determined and thus cell designing can be easily performed. For example, when a negative electrode should be pre-doped, the usage area of the negative electrode can be conveniently clarified by setting the irreversible capacity of the positive electrode active material according to the negative electrode capacity.

### List of Reference Signs

- 10: = lithium ion storage device
- 12: = negative electrode
- 14: = negative electrode collector
- 16: = negative electrode active material layer
- 18: = positive electrode
- 20: = positive electrode collector
- 22: = positive electrode active material layer
- 24: = lead
- 25: = film-like separator
- 26: = lead

## Claims

1. A lithium ion storage device comprising
- a positive electrode (18) having a positive electrode active material (22) that is a lithium-containing compound and is capable of absorbing and desorbing lithium ions, and
- a negative electrode (12) having a negative electrode active material (16) capable of absorbing and desorbing lithium ions,
wherein an irreversible capacity of the positive electrode active material (22) that is a capacity at which lithium ions cannot be reabsorbed after being desorbed from the positive electrode active material (22),
is 6 % to 40 % of a usage capacity of the negative electrode (12) that is a capacity at which lithium ions are reversibly absorbed and desorbed by the negative electrode active material (16).

2. The lithium ion storage device according to claim 1,
wherein an initial charge-discharge efficiency of the positive electrode (18) is 50 % to 94%.

3. The lithium ion storage device according to claim 1 or 2,
wherein a usage area relative to a reversible capacity of the negative electrode active material (16) is 4 % to 80 %.

4. The lithium ion storage device according to any one of claims 1 to 3,
wherein the positive electrode active material (22) includes one or more species selected from an oxide, an organic compound, a sulfide, a phosphate, a metal complex, a conductive polymer, and a metal.
